# EUROPÄISCHE PATENTANMELDUNG

(11) **EP 2 043 238 A1**
(43) Veröffentlichungstag der Anmeldung: **01.04.2009**
(21) Anmeldenummer: 07117568.1
(22) Anmeldetag: 28.09.2007
(51) Int. Cl.: H02K 33/04, H02K 33/12, H02K 33/16

(54) **Elektromagnetische Antriebsvorrichtung**

(71) Anmelder: Siemens Building Technologies HVAC Products GmbH, 76437 Rastatt (DE)
(72) Erfinder: Obrecht, Klaus, 76534, Baden-Baden (DE); Wissler, Karl Anton, 76437, Rastatt (DE)
(74) Vertreter: Weise, Wolfgang

(57) **Zusammenfassung**

Antriebsvorrichtung mit wenigstens einer auf einem Spulenträger (8) angeordneten Spule (1,2), einem beweglichen Anker (6), der von zwei in Bewegungsrichtung des Ankers wirkenden Federn (5,7) in einer Ruhestellung gehalten wird, wobei der Anker durch ein von der Spule (1,2) erzeugtes elektromagnetisches Feld in eine lineare um eine Mittenposition in axialer Richtung oszillierende Schwingung versetzbar ist, **dadurch gekennzeichnet, dass** zwei in Serie oder parallel geschaltete Spulen (1,2) auf dem Spulenträger (8) rotationssymmetrisch zum Anker (6) angeordnet sind und dass quer zur Bewegungsrichtung des Ankers (6)zwischen den Spulen (1,2) statisch ein Permanentmagnet (3) und in Bewegungsrichtung des Ankers (6) zwei Polschuhe (4) so angeordnet sind, dass zwei symmetrische magnetische Kreise gebildet werden, deren Kräfte sich in der Mittenposition aufheben.

## Beschreibung

Die Erfindung betrifft eine Antriebsvorrichtung mit wenigstens einer auf einem Spulenträger angeordneten Spule, einem beweglichen Anker, der von zwei in Bewegungsrichtung des Ankers wirkenden Federn in einer Ruhestellung gehalten wird, wobei der Anker durch ein von der Spule erzeugtes elektromagnetisches Feld in eine lineare um eine Mittenposition in axialer Richtung oszillierende Schwingung versetzbar ist.

Eine solche Antriebsvorrichtung ist beispielsweise aus der Patentanmeldung WO 2005/086325 A1 bekannt. Diese umfasst eine Erregerwicklung, einen von dem Magnetfeld der Wicklung in eine lineare um eine Mittenposition in axialer Richtung oszillierende Schwingung zu versetzenden magnetischen Anker, wobei zu beiden Seiten der Mittenposition Federn vorgesehen sind, die der Energiespeicherung und Richtungsumkehr des um die Mittenposition oszillierenden Ankers dienen. Bei der bekannten Antriebsvorrichtung ist die Ruhestellung des Ankers, in der die Federkräfte gerade aufgehoben werden, von der Mittenposition um eine vorbestimmte Wegstrecke nach einer Seite hin verschoben.

Der Erfindung liegt die Aufgabe zugrunde, eine Antriebsvorrichtung vorzuschlagen, welche zwei Arbeitszyklen pro Umlauf besitzt und die bei einfachem Aufbau einen hohen Wirkungsgrad und einen variablen Hub besitzt.

Diese Aufgabe wird durch die Merkmale des Patentanspruchs 1 gelöst. Die Erfindung zeichnet sich unter anderem dadurch aus, dass zwei in Serie oder parallel geschaltete Spulen auf einem Spulenträger rotationssymmetrisch zum Anker angeordnet sind. Dabei ist ein Permanentmagnet statisch zwischen den Spulen zur Bewegungsrichtung des Ankers und in Bewegungsrichtung des Ankers sind zwei Polschuhe so angeordnet, dass zwei symmetrische magnetische Kreise gebildet werden, deren Kräfte sich in der Mittenposition des Ankers aufheben.

Der statisch zwischen den Spulen angeordnete Permanentmagnet ermöglicht durch seine Remanenzkraft eine Reduktion der schwingenden Ankermasse, wodurch ein hoher Wirkungsgrad erhalten wird. Auch erlaubt der Permanentmagnet zusammen mit der jeweiligen Federkonstanten eine einfache Abstimmung der Antriebsvorrichtung. Auch wird durch die Anordnung des Permanentmagneten zwischen den Spulen die Symmetrie der magnetischen Kreise verbessert. Der Permanentmagnet kompensiert teilweise die Federkräfte und erzeugt in Kombination mit der Anker-/ Polschuhgeometrie und dem von den Spulen erzeugten elektromagnetischen Feld eine definierte Kraft-/ Weg-Kennlinie. Da die Spulen auf einem Spulenträger in einem Arbeitsgang gewickelt werden, kann der Spulenaufbau kostengünstig realisiert werden.

Vorzugsweise ist der Permanentmagnet spielfrei zwischen den Spulen positioniert und seitlich in den Spulenträger eingeschoben. Die Polschuhe sind vorzugsweise so geformt, dass der sich bewegende Anker in die Polschuhe eintauchen kann. Vorzugsweise wird die Antriebsvorrichtung mit einer Netzwechselspannung betrieben, ohne dass hierfür eine Ansteuerelektronik benötigt wird. Die Antriebsvorrichtung kann beispielsweise in Verbindung mit einer Pumpe oder einem Ventil eingesetzt werden. Weitere Vorteile der Erfindung ergeben sich aus der nachfolgenden Beschreibung und sind Gegenstand der abhängigen Patentansprüche. Es zeigen:
- Figur 1: Die erfindungsgemäße Antriebsvorrichtung
- Figur 2: Antriebsvorrichtung mit Spulenträger
- Figur 3 und 4: Verschiedene Ankerpositionen der Antriebsvorrichtung
- Figur 5 und 6: Ersatzschaltbild der in Serie oder parallel geschalteten Spulen

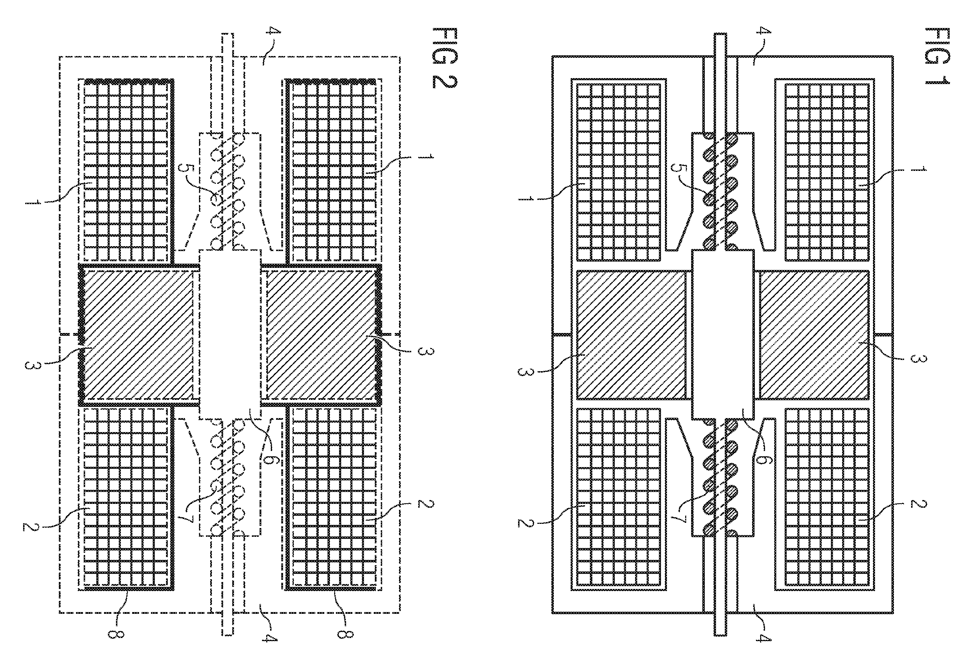

Die in Figur 1 gezeigte Antriebsvorrichtung umfasst zwei in Serie oder parallel geschaltete Spulen 1, 2 und einen beweglichen Anker 6, der z. B. aus weichmagnetischem Material bestehen kann. Der Anker 6 wird von zwei in Bewegungsrichtung des Ankers wirkenden Federn 5,7 in einer Ruhestellung gehalten. Die Ruhestellung des Ankers 6 entspricht hierbei der Antriebsmitte, d. h. der Mittenposition. Quer zur Bewegungsrichtung des Ankers 6 ist ein Permanentmagnet 3 statisch zwischen den Spulen 1,2 und in Bewegungsrichtung des Ankers sind zwei Polschuhe 4 so angeordnet, dass zwei symmetrische magnetische Kreise gebildet werden, deren Kräfte sich in der Mittenposition aufheben. Die Polschuhe 4 bestehen aus weichmagnetischem Material und sind so geformt, dass der Anker 6 in die Polschuhe 4 eintauchen kann.

Figur 2 zeigt die in Figur 1 dargestellte Antriebvorrichtung mit einem Spulenträger 8 auf dem die Spulen 1,2, in Serie oder parallel gewickelt und rotationssymmetrisch zum Anker 6 angeordnet sind. Der Permanentmagnet 3, der aus einem hartmagnetischen Material besteht, ist spielfrei zwischen den Spulen 1,2 angeordnet und ist seitlich in den Spulenträger 8 eingeschoben. Die Spulenanschlüsse sind vorzugsweise auf einer Seite angeordnet, wobei die Verbindung der Spulen durch einen hier nicht dargestellten Kanal im Spulenträger erfolgen kann.

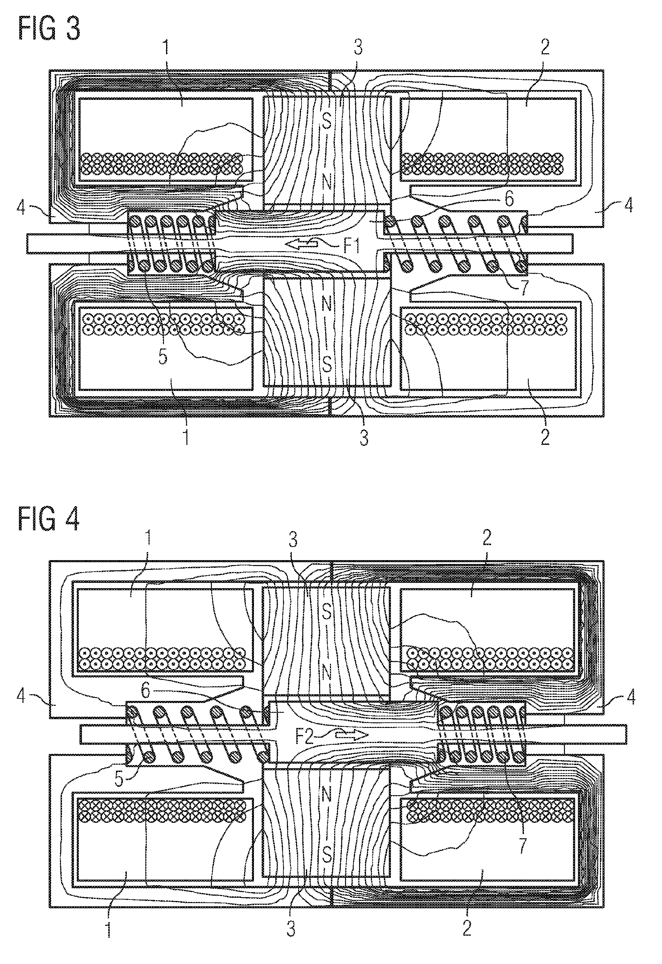

Figur 3 und 4 zeigen jeweils die Antriebsvorrichtung mit einem durch die Spulen 1 und 2 fließenden Wechselstrom, wobei die Stromrichtung verschieden ist. Die Stromrichtung und Polarisation des Permanentmagneten 3 bestimmen die in axialer Richtung auf den Anker 6 wirkenden Kräfte F1 und F2 und den Feldlinienverlauf durch die symmetrisch aufgebauten magnetischen Kreise. Fliest der Strom durch die Spulen 1, 2 in der in Figur 3 dargestellten Richtung, so bewegt sich der Anker 6 in Richtung der magnetischen Kraft F1 bis die von der Feder 5 ausgeübte entgegenwirkende Federkraft die magnetische Kraft F1 aufhebt. Mit Abnahme des Stroms bewegt sich der Anker 6 durch die von der Feder 5 auf den Anker 6 wirkende Federkraft in Richtung der Mittenposition des Ankers 6. Bei Stromrichtungswechsel bewegt sich der Anker 6 in gleicher Weise in die andere Kraftrichtung F2 bis die magnetische Kraft F2 durch die entgegenwirkende Kraft der Feder 7 aufgehoben wird, wie dies in Figur 4 dargestellt ist. Bei Ansteuerung der Spulen 1,2 mit einer Netzwechselspannung führt der Anker 6 eine um die Mittenposition in axialer Richtung oszillierende Bewegung in der angegebenen Richtung durch, wobei der Anker 6 synchron der Ansteuerfrequenz des jeweiligen Magnetkreises folgt. Der maximale Hub des Ankers 6 ist dabei durch die auf den Anker 6 wirkenden Federkräfte und die durch das elektromagnetische Feld erzeugten Kräfte F1 und F2 bestimmt.

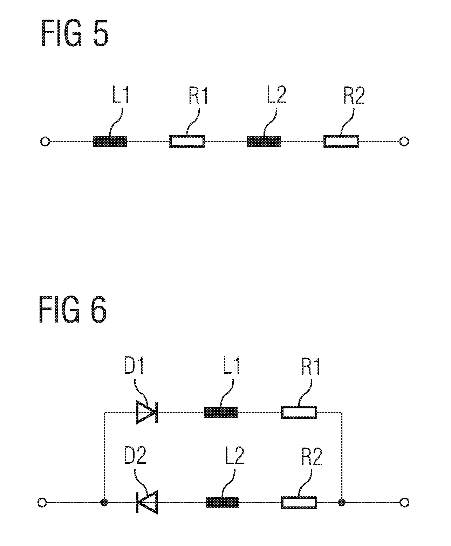

Figur 5 zeigt ein elektrisches Ersatzschaltbild der in Serie geschalteten Spulen. Die Spulen werden mit einer Wechselspannung versorgt, wodurch zusätzlich zu den Ohmschen Widerständen R1 und R2 die induktiven Anteile L1 und L2 auftreten. Die induktiven Anteile L1 und L2 der Spulen sind von der Windungsanzahl sowie von der Ankerposition abhängig. Ändert sich die Ankerposition, so bewirkt der in das elektromagnetische Feld sich bewegende Anker in einer Spule eine Induktivitätserhöhung und in der anderen Spule eine entsprechende Induktivitätsverringerung durch den sich aus dem Magnetfeld heraus bewegenden Anker.

Fließt in einer Spule ein Wechselstrom, so ändert sich die Stromaufnahme über der Ankerposition so, dass der Magnetkreis, mit dem geringeren Luftspalt eine höhere Impedanz infolge des imaginären Anteils aufweist als der Magnetkreis mit größerem Luftspalt. Bei den in Serie geschalteten Spulen bestimmt der geschlossene Magnetkreis mit dem höheren imaginären Impedanzanteil den Summenstrom. Die Spulenverluste im geöffneten Magnetkreis werden dabei durch den höheren Imaginärteil des geschlossenen Magnetkreises begrenzt. Die Serienschaltung der Spulen hat den Vorteil, dass gegenüber einer einzelnen Spule die Wirkverluste reduziert und somit der Wirkungsgrad der Antriebsvorrichtung verbessert werden kann.

Figur 6 zeigt ein Ersatzschaltbild der parallel geschalteten Spulen mit den Widerständen R1 und R2 und den Induktivitäten L1 und L2.Zusätzlich sind Dioden D1 und D2 zur Gleichrichtung vorgesehen, die so angeordnet sind, dass der Stromfluss durch die Spulen nur in der Arbeitsphase mit geringem Luftspalt ermöglicht wird, wodurch die Wirkverluste reduziert werden können.

## Patentansprüche

1. Antriebsvorrichtung mit wenigstens einer auf einem Spulenträger (8) angeordneten Spule (1,2), einem beweglichen Anker (6), der von zwei in Bewegungsrichtung des Ankers wirkenden Federn (5,7) in einer Ruhestellung gehalten wird, wobei der Anker durch ein von der Spule (1,2) erzeugtes elektromagnetisches Feld in eine lineare um eine Mittenposition in axialer Richtung oszillierende Schwingung versetzbar ist, **dadurch gekennzeichnet, dass** zwei in Serie oder parallel geschaltete Spulen (1,2) auf dem Spulenträger (8) rotationssymmetrisch zum Anker (6) angeordnet sind und dass quer zur Bewegungsrichtung des Ankers (6)zwischen den Spulen (1,2) statisch ein Permanentmagnet (3) und in Bewegungsrichtung des Ankers (6) zwei Polschuhe (4) so angeordnet sind, dass zwei symmetrische magnetische Kreise gebildet werden, deren Kräfte sich in der Mittenposition aufheben.

2. Antriebsvorrichtung na**ch** Anspruch1, **dadurch gekennzeichnet, dass** die Polschuhe (4) so geformt sind, dass der Anker (6) in die Polschuhe (4) eintauchen kann.

3. Antriebsvorrichtung nach Anspruch 1 oder 2, **dadurch gekennzeichnet, dass** der Permanentmagnet (3) spielfrei zwischen den Spulen (1,2) positioniert und seitlich in den Spulenträger (8) eingeschoben ist.

4. Antriebsvorrichtung nach einem der vorhergehenden Ansprüche, **dadurch gekennzeichnet, dass** die Spulen (1,2) mit einer Netzwechselspannung versorgt werden.

5. Antriebsvorrichtung nach Anspruch 4 , **dadurch gekennzeichnet, dass** bei parallel geschalteten Spulen (1,2) Dioden (D1, D2) zur Gleichrichtung der Wechselspannung vorgesehen sind.
